# EUROPEAN PATENT APPLICATION

(11) **EP 2 683 012 A1**
(43) Date of publication of application: **08.01.2014**
(21) Application number: 12752593.9
(22) Date of filing: 15.02.2012
(51) Int. Cl.: H01M 10/0567, H01M 10/052, H01M 10/0568, H01M 10/0569

(54) **NONAQUEOUS ELECTROLYTIC SOLUTION FOR SECONDARY CELL, AND NONAQUEOUS ELECTROLYTIC SOLUTION SECONDARY CELL**

(30) Priority: 28.02.2011 JP 2011042616
(71) Applicant: Showa Denko K.K., Tokyo 105-8518 (JP)
(72) Inventor: SHISHIKURA, Toshikazu, Tokyo 105-8518 (JP); IRIE, Koji, Tokyo 105-8518 (JP); HASATANI, Akio, Tokyo 105-8518 (JP)
(74) Representative: Strehl Schübel-Hopf & Partner
(86) International application number: PCT/JP2012/053497
(87) International publication number: WO 2012/117852

(57) **Abstract**

The present invention relates to a nonaqueous electrolytic solution for a secondary battery which solution comprises methyl difluoroacetate as an additive. It is sometimes hard to prepare batteries having good charge-discharge properties by the use of an electrolytic solution obtainable by using methyl difluoroacetate as a solvent and singly using LiPF₆ as an electrolyte salt. Concerning to a nonaqueous electrolytic solution which comprises an electrolyte, a solvent and an additive, the present invention improves the charge-discharge properties in a temperature range from low temperatures to high temperatures by using a nonaqueous electrolytic solution for a secondary battery which solution comprises methyl difluoroacetate in an amount of not less than 0.05 part by mass and not more than 10 parts by mass as an additive based on 100 parts by mass of the whole solvent.

## Description

### TECHNICAL FIELD

The present invention relates to a nonaqueous electrolytic solution for a secondary battery and a nonaqueous electrolytic solution secondary battery.

### TECHNICAL BACKGROUND

Nonaqueous electrolytic solution secondary batteries such that an alloy capable of occluding and releasing metallic lithium or lithium ions, or a carbon material is used as a negative electrode active material, and a lithium-containing transition metal oxide represented by the following chemical formula: LiMO₂ (M is a transition metal) or a lithium iron phosphate having an olivine structure is used as a positive electrode material have been watched as an battery having high energy density in recent years.

A nonaqueous electrolytic solution generally used is obtainable by dissolving a lithium salt such as LiPF₆, LiBF₄ or LiClO₄ in a non-protonic organic solvent. Examples of the non-protonic organic solvent used are carbonates such as propylene carbonate, ethylene carbonate, diethyl carbonate and ethylmethyl carbonate, esters such as γ-butyrolactone and methyl acetate, and ethers such as diethoxy ethane and the like. Furthermore, Patent document 1, Patent document 2 and Patent document 3 disclose the addition of at least one of vinylene carbonate, propane sultone and 4-fluoroethylene carbonate as an additive for forming an effective ion conductive film on a negative electrode or a positive electrode.

Non-patent document 1 and Non-patent document 2 disclose that methyl difluoroacetate (CHF₂COOCH₃) obtainable by fluorination of methyl acetate (CH₃COOCH₃) has low reactivity with a discharged positive electrode or a discharged negative electrode and thereby it is effective for improving the heat stability of a battery. Furthermore, Patent document 4 discloses that when an A electrolyte salt of at least one selected from LiPF₆ and LiBF₄ and a B electrolyte salt of at least one selected from LiN(CₗF₂ₗ₊₁SO₂) (CₘF₂ₘ₊₁SO₂) wherein "l" and "m" are each an integer of 0 or more and LiC(CₚF₂ₚ₊₁SO₂)(C_{q}F_{2q+1}SO₂) (CᵣF₂ᵣ₊₁SO₂) wherein "p", "q" and "r" are each an integer of 0 or more are mixed and used as a solute, the charge and discharge performances of a battery such as initial discharging capacity and discharging load factor at room temperature are improved. Moreover, Patent document 5 discloses that a battery obtainable by using lithium fluorododecaborate represented by Li₂B₁₂FₓZ₁₂₋ₓ wherein X is at least 4 and not more than 12, and Z is H, Cl or Br as an electrolyte has excellent heat stability and excellent overcharging properties.

### PRIOR ART

### Patent document

Patent document 1: JP-A-H8(1996)-45545
Patent document 2: JP-A-S62(1987)-100948
Patent document 3: JP-A-2006-4878
Patent document 4: JP-A-2007-87883
Patent document 5: JP-B-4414306

### Non-patent document

Non-patent document 1: Jun-Inchi Yamaki, Ikiko Yamazaki, Minato Egashira, Shigeto Okada, J. Power Sources, 102, 288 (2001)
Non-patent document 2: Kazuya Sato, Liko Yamazaki, Shigeto Okada, Jun-Inchi Yamaki, Solid State Ionics, 148, 463 (2002)

### SUMMARY OF THE INVENTION

### SUBJECT TO BE SOLVED BY THE INVENTION

However, in the case that methyl difluoroacetate is used as a solvent of a nonaqueous electrolytic solution secondary battery and LiPF₆ is singly used as an electrolyte salt according to the above documents, it is sometimes difficult to prepare a battery having good charge-discharge properties. This may be caused for the reason that the mixing with LiPF₆ induces side-reaction of a chemical species such as HF and PF₅ generated in an electrolytic solution with methyl difluoroacetate. Meanwhile, the mixing of at least one A electrolyte salt selected from LiPF₆ and LiBF₄ and at least one B electrolyte salt selected from LiN (CₗF₂ₗ₊₁SO₂) (CₘF₂ₘ₊₁SO₂) (in the formula, "l" and "m" are each an integer of 0 or more) and LiC(CₚF₂ₚ₊₁SO₂) (C_{q}F_{2q+1}SO₂) (CᵣF₂ᵣ₊₁SO₂) (in the formula, "p", "q" and "r" are each an integer of 0 or more) and the using of the mixture improves charge-discharge performance of a battery at room temperature, but sometimes does not improve high temperature properties at 45°C or higher and does not prevent thermal runaway at the time of over-charging. In the case that the electrolyte used is not stable at high temperatures, when a battery is over charged, the voltage may be increased as it is and thereby oxygen is released by decomposition of a positive electrode, the solvent may be decomposed, and lithium and the like may be electrodeposited and thereby both electrodes are short circuited to induce battery deterioration, and generation of heat or ignition due to thermal runaway.

When lithium fluorododecaborate represented by Li₂B₁₂FₓZ₁₂₋ₓ, wherein X is not less than 8 and not more than 12, Z is H, Cl or Br is used in an electrolyte, the high-temperature heat resistance of a battery is improved, deterioration of a battery due to over charging or ignition due to thermal runaway can be suppressed by the redox shuttle mechanism of the electrolyte, but discharging rate properties at room temperature and discharging properties at low temperatures particularly at below-zero temperatures are sometimes insufficient. These facts may be caused based on reasons such that electrolyte anions are very large and the moving resistance thereof is high and thereby the conductivity is low.

As described in the above, various additives, solvents and electrolytes have been disclosed in order to improve the charge-discharge efficiency of a nonaqueous electrolytic solution secondary battery, but they are not sufficient for improving the charge-discharge properties in a wide temperature range from low temperatures to high temperatures of a battery.

It is an object of the present invention to provide a nonaqueous electrolytic solution for a secondary battery having excellent charge-discharge properties in a wide temperature range from low temperatures to high temperatures of a battery and to provide a nonaqueous electrolytic solution secondary battery using thereof.

### MEANS FOR SOLVING THE SUBJECT

The nonaqueous electrolytic solution for a secondary battery according to the present invention comprises an electrolyte, a solvent and an additive and comprises methyl difluoroacetate in an amount of not less than 0.05 part by mass and not more than 10 parts by mass based on 100 parts by mass of the total of the solvent as the additive. The electrolyte preferably comprises lithium fluorododecaborate (A) represented by Li₂B₁₂FₓZ₁₂₋ₓ (in the formula, X is not less than 8 and not more than 12, Z is a hydrogen atom, a chlorine atom or a bromine atom), and at least one electrolyte salt (B) selected from LiPF₆ and LiBF₄. Furthermore, it is preferred that the concentration of the lithium fluorododecaborate (A) in the electrolytic solution is not less than 0.2 mol/L and the concentration of the electrolyte salt (B) in the electrolytic solution is not less than 0.05 mol/L.

The electrolyte preferably has a molar ratio of the lithium fluorododecaborate (A) to the electrolyte salt (B) (A:B) of from 95:5 to 30:70 provided that (A) + (B) = 100, and the nonaqueous electrolytic solution for a secondary battery preferably has a total molar concentration of the lithium fluorododecaborate (A) and the electrolyte salt (B) ((A) + (B)) of from 0.25 to 1.5 mol/L.

The lithium fluorododecaborate (A) is preferably a compound of the formula in which X is 12.

The nonaqueous electrolytic solution for a secondary battery of the present invention further comprises 1,3-propane sultone as an additive in an amount of not less than 0.05 part by mass and not more than 10 parts by mass based on 100 parts by mass of the total of the solvent.

The solvent preferably comprises at least one carbonate selected from a cyclic carbonate and a chain carbonate.

The nonaqueous electrolytic solution secondary battery of the present invention comprises a positive electrode and a negative electrode, and the nonaqueous electrolytic solution for a secondary battery.

### EFFECT OF THE INVENTION

The nonaqueous electrolytic solution secondary battery having excellent charge-discharge properties can be prepared by the use of the nonaqueous electrolytic solution for a secondary battery of the present invention.

According to the present invention, the nonaqueous electrolytic solution secondary battery having excellent heat stability at a high temperature, excellent charge-discharge performance at a low temperature and excellent rate properties at room temperature can be prepared, and further the redox shuttle mechanism works at the time of overcharge to prevent the electrolytic solution or the positive electrode from decomposition, with the result that the battery can be prevented from deterioration.

### BRIEF DESCRIPTION OF THE DRAWING

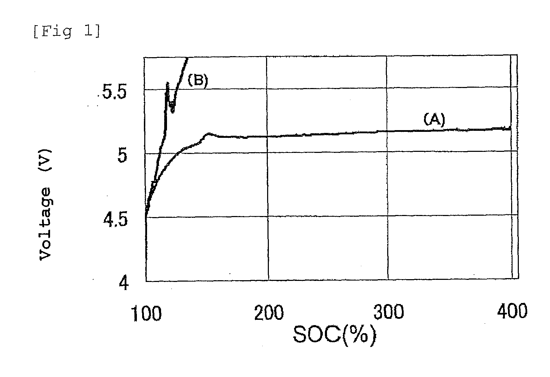

Fig. 1 is a curve which shows the relation of SOC (state of charge) showing a charge level and a voltage at the time of overcharge. The line (A) shows a voltage change at the time of an overcharge test on a battery prepared in Example 1 in the battery evaluation 7 of Example 16 and the line (B) shows a voltage change at the time of the same overcharge test on a battery prepared in Comparative Example 3.

### EMBODIMENT FOR CARRYING OUT THE INVENTION

### Nonaqueous electrolytic solution for a secondary battery

The nonaqueous electrolytic solution for a secondary battery of the present invention comprises the electrolyte, the solvent and the additive.

### <Additive>

With regard to the additive of the present invention, the one kind of the additives is blended in an amount of not more than 10 parts by mass based on 100 parts by mass of the total of the solvent constituting the electrolytic solution of the present invention. In the case that a small amount of a solvent component is present in the solvent and the blended amount of the solvent component is less than 10 parts by mass based on 100 parts by mass of the total amount of the solvent excluding the solvent component in a small amount, a small amount of the solvent component is considered as the additive and is excluded from the solvent. Moreover, in the case that two or more kinds of the solvent components in small amounts are present and one kind of a small amount of the solvent component (i) is considered as an additive by the above definition, other solvent components in an amount as same as or smaller than that of the solvent component (i) are also considered as an additive.

In the present invention, methyl difluoroacetate (CHF₂COOCH₃) is used as the additive and the amount of the methyl difluoroacetate added is not less than 0.05 part by mass and not more than 10 parts by mass based on 100 parts by mass of the total of the solvents. The amount of the methyl difluoroacetate added is preferably not less than 0.1 part by mass and not more than 5 parts by mass, more preferably not less than 0.1 part by mass and not more than 3 parts by mass, especially preferably not less than 0.5 part by mass and not more than 3 parts by mass.

It is considered that at the time of initial charging, a part of the methyl difluoroacetate is reduction decomposed on a negative electrode and a coating film having good ion conductivity is formed on the negative electrode to improve the performance of a resulting battery.

When the amount of the methyl difluoroacetate added is less than the lower limit of the above range, the coating film formation on the negative electrode may be not sufficient and thereby a battery having sufficient charge-discharge properties sometimes cannot be prepared. On the other hand, when the amount thereof is over the upper limit of the above range, the reaction on the negative electrode may proceed excessively, the film formed on the negative electrode surface may be thick and the reaction resistance of the negative electrode may be increased, and thereby the discharge volume of a battery may be lowered and the charge-discharge properties such as cycle properties and the like may be lowered.

In the present invention, using methyl difluoroacetate as the additive, a protective coating film having favorable ion conductivity can be formed on the negative electrode surface, and the charge-discharge properties of a battery in a temperature range from a low temperature of about -25°C to a high temperature of about 80°C can be improved.

In the present invention, other additives may be used in accordance with the desired use within the limit of not missing the effect of the present invention in addition to the methyl difluoroacetate. Examples of the other additives are unsaturated carbonates such as vinylene carbonate, 4,5-dimethylvinylene carbonate, 4,5-diethylvinylene carbonate, 4,5-dipropylvinylene carbonate, 4-ethyl-5-methylvinylene carbonate, 4-ethyl-5-propylvinylene carbonate, 4-methyl-5-propylvinylene carbonate, vinylethylene carbonate and divinylethylene carbonate; sultones such as 1,3-propane sultone and 1,4-butane sultone; mono fluorocarbonates such as monofluoroethylene carbonate; and lithium-bisoxalate borate. In the case of using the other additives, the amount of the other additives added is preferably not less than 0.05 part by mass and not more than 10 parts by mass, more preferably not less than 0.05 part by mass and not more than 2 parts by mass based on 100 parts by mass of the total of the solvents. Furthermore, the amount of the other additives is preferably less than the amount of the methyl difluoroacetate used. In the case of mixing addition with methyl difluoroacetate, 1,3-propane sultone is preferable among these additives. Using methyl difluoroacetate and 1,3-propane sultone as the additive, a battery having excellent balance in charge-discharge properties in a wide temperature range from low temperatures to high temperatures and also having excellent over charging properties can be prepared. These other additives may be used singly or two or more may be mixed for use.

In view of forming a coating film having good conductivity, the total amount of the additives is preferably from 0.5 to 15 parts by mass, more preferably 1 to 10 parts by mass based on 100 parts by mass of the total of the solvent. When the total amount of the additives added is less than the lower limit of the above range, the coating film formation on a negative electrode may be not sufficient and thereby a battery having sufficient charge-discharge properties sometimes is not prepared. On the other hand, when the amount is over the upper limit of the above range, the coating film formed on the negative electrode surface may be thick and thereby the reaction resistance of the negative electrode may be increased and the charge-discharge properties of a resulting battery may be lowered.

### Electrolyte

The electrolyte is not particularly limited, and is preferably an electrolyte which comprises the lithium fluorododecaborate (A) represented by the following formula (1) and at least one electrolyte salt (B) selected from the group consisting of LiPF₆ and LiBF₄ (hereinafter sometimes referred to "mixed electrolyte").

Zi₂B₁₂FₓZ₁₂₋ₓ (1)

In the formula (1), X is not less than 8 and not more than 12, preferably not less than 10 and not more than 12, Z is a hydrogen atom, a chlorine atom or a bromine atom, preferably a hydrogen atom.

In the present invention, the use of the above mixed electrolyte can more definitely improve battery properties such as high temperature heat resistance, charge-discharge efficiency at 45° C or higher, further 60° C or higher, furthermore 80° C or higher and cycle life as compared with the use of the LiPF₆ single electrolyte. Furthermore, at the time of over charging, the increase of voltage is suppressed by the redox shuttle mechanism of anion of lithium fluorododecaborate, to not only prevent decomposition of the solvent or the electrode but also suppress the generation of dendrites of lithium and the like, so that the deterioration of the battery and thermal runaway caused by over charging can be prevented. Furthermore, the electrolyte has a high electric conductivity and thereby when aluminum is used as a current collector of a positive electrode, the melting of aluminum can be suppressed.

In the formula (1), when X is less than 8, the electric potential at which the redox reaction is caused may be low, namely during charging the lithium ion battery, the reaction may be occurred and thereby the charge-discharge efficiency of the battery may be decreased. Therefore, X is preferably selected from 8 to 12 in accordance with the kind of the electrode used or the use of the battery. Although X is appropriately selected in accordance with the kind of the solvent used, X is more preferably 12 because the compound having a high electric potential capable of causing the redox reaction has X of 12.

Examples of the lithium fluorododecaborate (A) includes Li₂B₁₂F₈H₄, Li₂B₁₂F₉H₃, Li₂B₁₂ F₁₀H₂, Li₂B₁₂F₁₁H, various compounds having X of 9 to 10 on the average, Li₂B₁₂FₓCl₁₂₋ₓ (X is 10 or 11) and Li₂B₁₂FₓBr₁₂₋ₓ (X is 10 or 11). Of these, Li₂B₁₂F₁₂, Li₂B₁₂F₁₁Z and Li₂B₁₂F₁₀H₂ are preferred. The lithium fluorododecaborate (A) may be used singly or two or more may be mixed for use.

When the electrolytic solution of the present invention contains such lithium fluorododecaborate (A) as an electrolyte, the battery having particularly excellent over charging properties can be prepared.

In the present invention, as at least one electrolyte salt (B) selected from LiPF₆ and LiBF₄, LiPF₆ is particularly preferably used because of having high conductivity although it may be selected in consideration of the compatibility with the other additives as described above or the battery specification.

In the mixed electrolyte, the concentration of the lithium fluorododecaborate (A) in the nonaqueous electrolytic solution for a secondary battery is preferably not less than 0.2 mol/L, more preferably from 0.3 to 1.0 mol/L, and the concentration of the electrolyte salt (B) in the nonaqueous electrolytic solution for a secondary battery is preferably not less than 0.05 mol/L, more preferably from 0.07 to 0.3 mol/L.

When the concentration of the lithium fluorododecaborate (A) in the electrolytic solution is lower than the lower limit of the above range, the electric conductivity of the electrolyte may lower, the resistance of the battery at the time of charging or discharging may increase and the redox shuttle at the time of over charging may lower. On the other hand, when the concentration of the lithium fluorododecaborate (A) in the electrolytic solution is too high (for example, 1.0 mol/L or higher), the viscosity of the nonaqueous electrolytic solution for a secondary battery may increase, the electric conductivity may lower and thereby the charge-discharge performance of the battery such as rate properties and the like may decrease.

When the concentration of the electrolyte salt (B) in the electrolytic solution is less than the lower limit of the above range in the use of aluminum as a collector of a positive electrode, a sufficient protective film may not be formed on the aluminum collector and a battery having good charge-discharge properties may not be prepared in some cases. Furthermore, the conductivity of the nonaqueous electrolytic solution for a secondary battery may not sufficient and thereby a battery having excellent charge-discharge properties may not be prepared in some cases.

In the present invention, the mixing molar ratio of the lithium fluorododecaborate (A) to the electrolyte salt (B) ((A) : (B)) is preferably from 95:5 to 30:70, more preferably 90:10 to 50:50, furthermore preferably 85:15 to 60:40 provided that (A)+(B)=100.

When the amount (mole) of the electrolyte salt (B) used is more than the amount (mole) of the lithium fluorododecaborate (A), the heat resistance at 45° C or higher and charge-discharge properties of a resulting battery may decrease, and further the over-charging properties thereof may decrease in some cases. Furthermore, methyl difluoroacetate may be decomposed by the reaction of methyl difluoroacetate with the result that a battery having excellent charge-discharge properties may not be prepared in some cases.

The total molar concentration of the lithium fluorododecaborate (A) and the electrolyte salt (B) in the nonaqueous electrolytic solution for a secondary battery ((A)+(B)) in the present invention is preferably from 0.25 to 1.5 mol/L, more preferably 0.4 to 0.8 mol/L.

When the total molar concentration of the mixed electrolyte in the nonaqueous electrolytic solution for a secondary battery is less than the lower limit of the above range, the conductivity of the electrolyte may be low, or the over charging properties of a resulting battery may decrease in some cases. When it is over the upper limit of the above range, the viscosity of the electrolyte may increase and the conductivity thereof may decrease to decrease the battery properties in some cases.

### <Solvent>

Although the solvent is not limited particularly, a preferable example thereof is at least one carbonate selected from the group consisting of cyclic carbonates and chain carbonates. Examples of the carbonates are cyclic carbonates such as ethylene carbonate (EC), propylene carbonate (PC) and butylenes carbonate; chain-like carbonates such as diethyl carbonate (DEC), dimethyl carbonate (DMC), methylethyl carbonate, methylpropyl carbonate, ethylpropyl carbonate and dipropyl carbonate; and fluorine-substituted cyclic or chain-like carbonate such that parts of hydrogen atoms (two or more hydrogen atoms) are substituted with fluorine atoms, such as trifluoropropylene carbonate, bis(trifluoroethyl) carbonate and trifluoroethylmethyl carbonate. These may be used singly or two or more may be mixed for use. In order to obtain excellent battery properties in the wide temperature region from low temperatures to high temperatures, it is preferred that two or more solvents be mixed for use.

In viewpoint of improving the battery performance, solvents other than the above carbonates may be mixed as a solvent in accordance with the desired use, the electrolyte and the additives.

Non-limiting examples of the solvent other than the carbonates are dimethoxy ethane, diglyme, triglyme, polyethylene glycol, γ-butylolactone (γ-BL), sulfolane, methyl acetate, ethyl acetate, propyl acetate, methyl propionate, ethyl propionate, tetrahydrofurane, 2-methyl tetrahydrofurane, 1,4-dioxane, acetonitrile, 1,2,2,2-tetrafluoroethylethylether (F-ether), and n-butyl-1,1,2,2-tetrafluoroethylether(TFEE). These may be used singly, or two or more may be mixed for use.

The preferable solvent is at least one solvent selected from the group consisting of ethylene carbonate, propylene carbonate, diethyl carbonate, dimethyl carbonate, methylethylcarbonate, γ-butylolactone, 1,2,2,2-tetrafluoroethylethylether and n-butyl-1,1,2,2-tetrafluoroethylether. Particularly, it is preferred to mix these solvents for use.

### <Nonaqueous electrolytic solution secondary battery>

The nonaqueous electrolytic solution secondary battery of the present invention comprises a positive electrode, a negative electrode and the nonaqueous electrolytic solution for a secondary battery. The structure and the like of the secondary battery are not particularly limited and can be arranged in accordance with the desired use.

The nonaqueous electrolytic solution secondary battery of the present invention may further comprise a separator made of polyethylene and the like.

The nonaqueous electrolytic solution secondary battery of the present invention shows excellent charge-discharge properties because of containing the nonaqueous electrolytic solution of the present invention.

The negative electrode used in the present invention is not particularly limited and preferably comprises a current collector, a conductive agent, a negative electrode active substance, a binder and/or a thickener.

Preferable examples of the negative electrode active substance, which are not particularly limited, are materials capable of occluding and releasing lithium, such as artificial graphite, natural graphite, metal lithium, aluminum, lead, silicon, a substance whose Si metal surface is coated with carbon nanotube, an alloy of tin and the like and lithium, tin oxide and titanium oxide. These are kneaded with the binder such as polytetrafluoroethylene (PTFE), polyvinylidene fluoride (PVdF) styrene butadiene rubber (SBR) and the like or the thickener such as carboxymethyl cellulose and the like by any conventional methods, and can be used as a compound. The negative electrode can be prepared using this compound and the current collector made of copper foil and the like.

The positive electrode used in the present invention, which is not particularly limited, preferably comprises a current collector, a conductive agent, a positive electrode active substance, a binder and/or a thickener.

Usable typical examples of the positive electrode active substance are a composite oxide of lithium with a transition metal such as cobalt, manganese or nickel (for example: LiCo_{1/3}Ni_{1/3}Mn_{1/3}O₂) and a lithium composite oxide obtainable by substituting a part of the lithium parts or the transition metal parts in the above composite oxides with cobalt, nickel, manganese, aluminum, boron, magnesium, iron, copper or the like (for example: LiMn₂O₄, LiFePO₄ and LiCoO₂). Moreover, a lithium-containing transition metal phosphate having an olivine structure can be also used. These are mixed with the conductive agent such as carbon material such as acetylene black or carbon black, and the binder such as polytetrafluoroethylene (PTFE) or polyvinylidene fluoride (PVdF), and can be used as a compound. The positive electrode can be prepared using this compound and the current collector made of an aluminum foil or the like.

### EXAMPLE

The present invention will be further described with reference to the following examples, but the present invention should not be limited by the examples, and variations and modifications may occur without departing from the scope of the present invention.

### Synthesis Example 1

### [Preparation of Li₂B₁₂FₓH₁₂₋ₓ (X = 10 to 12)]

To a colorless slurry containing 2.96 g(11.8 mmol) of K₂B₁₂H₁₂CH₃OH in 6 mL of a formic acid having an average Hammett acidity H₀ of -3, a mixed gas of 10%F₂/10%O₂/80%N₂ (the fluorine amount in the mixed gas; 142 mmol) was added at a temperature of 0 to 20°C and thereby K₂B₁₂H₁₂CH₃OH was fluorinated to prepare a colorless solution. Subsequently, to the solution, the above mixed gas was added at 30° and further fluorinated (3%) and thereby a solid was precipitated. A solvent was exhausted over night and thereby 5.1 g of a colorless brittle solid was prepared. This crude product was analyzed by ¹⁹F-NMR and was found that it was mainly composed of B₁₂F₁₀H₂²⁻(60%), B₁₂F₁₁H²⁻(35%) and B₁₂F₁₂²⁻(5%).

The crude product was dissolved in water and the solution was regulated to have a pH of 4 to 6 by triethylamine and trimethylamine hydrochloride. The precipitated product was filtered and the residue was dried, and then suspended in water again to prepare a slurry. To this slurry, 2 equivalents of lithium hydroxide hydrate was added and thereby triethylamine was removed. All the triethylamine was removed by distillation, and then lithium hydroxide hydrate was added and thereby the resultant solution had a pH of 9.5. Water was removed by distillation and the resultant product was dried in a vacuum at 200°C for 6 hr. Li₂B₁₂FₓH₁₂₋ₓ (X = 10, 11, 12) was prepared. In this method, a compound having an average composition of Li₂B₁₂F₁₀H₂, a compound having an average composition of Li₂B₁₂F₁₁H and Li₂B₁₂F₁₂ were prepared by regulating the fluorination time and the like. Each of the compounds had a yield of about 75%.

### Synthesis Example 2

### [Preparation of Li₂B₁₂FₓBr₁₂₋ₓ (X ≥ 10, average X = 11)]

3 g (0.008 mol) of Li₂B₁₂FₓH₁₂₋ₓ (X ≥ 10) having an average composition of Li₂B₁₂F₁₁H was dissolved in 160mL of a 1 mol/L HCl aqueous solution. To this solution, 1.4 mL (0.027 mol) of Br₂ was added and this mixed solution was refluxed at 100°C for 4 hr. A specimen was collected for NMR analysis.

A part of the specimen was returned to reflux and chlorine was added over 6 hr to form a brominating agent BrCl. After a lapse of 6 hr, the specimen was collected and subjected to NMR analysis. The specimen had the same composition as one prepared before the chlorine addition. HCl and water were removed by distillation and a resultant product was dried in a vacuum at 150°C. The total amount of 2.55 g of a white solid product was isolated. A compound represented by Li₂B₁₂FₓBr₁₂₋ₓ (X ≥ 10, average X = 11) was prepared and the compound had a theoretical amount of 3.66 g.

### Synthesis Example 3

### [Preparation of Li₂B₁₂FₓCl₁₂₋ₓ (average X = 11)]

20 g of Li₂B₁₂FₓH₁₂₋ₓ (X ≥ 10) having an average composition of Li₂B₁₂F₁₁H was dissolved in 160mL of a 1 mol/L HCl aqueous solution in a three-necked bottom-round flask equipped with a reflux condenser and a glass bubbler (fritted bubbler). This mixture was heated to 100°C and the mixture was subjected to bubbling with a Cl₂ gas at a rate of 15 standard cubic centimeters per minute (sccm/min). The effluent solution passed through the condenser was passed through a solution in which Na₂SO₃ was dissolved in KOH. The solution was subjected to bubbling with Cl₂ for 16 hr and then the flask was purged with air. HCl and water were removed by distillation and a residue was titrated with ether. Ether was evaporated and a white solid was dried by a vacuum dryer to collect 20 g of a compound represented by Li₂B₁₂FₓCl₁₂₋ₓ (average X = 11) (92%). ¹⁹F-NMR in D₂O: -260.5, 0.035F; -262.0, 0.082F; -263.0, 0.022F; -264.5, 0.344F; -265.5, 0.066F; -267.0, 0.308F; -268.0, 0.022F; -269.5, 1.0F.
¹¹B-NMR in D₂O: -16.841; -17.878

### Example 1

### [Preparation of Electrolytic solution]

Li₂B₁₂F₁₂ wherein X is 12 (having a purity of 99.9% or more) prepared by the method of Synthetic Example 1 and LiPF₆ were mixed with a solvent which comprises 10 % by volume of ethylene carbonate (EC), 20 % by volume of propylene carbonate (PC), 40% by volume of methylethyl carbonate (EMC) and 30 % by volume of diethyl carbonate (DEC) (EC + PC + EMC + DEC = 100 % by volume) so that Li₂B₁₂F₁₂ and LiPF₆ each had a concentration of 0.4 mol/L and 0.2 mol/L respectively. Furthermore, 1.5 parts by mass of methyl difluoroacetate was added as an additive to the mixture based on 100 parts by mass of the whole solvent (EC + PC + EMC + DEC) to prepare an electrolytic solution 1.

### [Measurement of Ion conductivity]

The ion conductivity of the electrolytic solution 1 was measured using a Radiometer CDM210 conductivity meter (manufactured by TOA DKK CORPORATION). As a result, the conductivity at 45° C was 8.75 mS/cm, the conductivity at 25° C was 4.81 mS/cm, the conductivity at 0° C was 2.46 mS/cm, the conductivity at -10° C was 1. 80 mS/cm and the conductivity at -25° C was 1.00 mS/cm.

### [Preparation of Positive electrode]

LiCo_{1/3}Ni_{1/3}Mn_{1/3}O₂ as a positive electrode active substance, a carbon material as a conductive agent and polyvinylidene fluoride as a binder were added to N-methyl-2-pyrolydone so that the weight ratio of the active substance, the conductive agent and the binder was 95:25:2.5. Thereafter, they were kneaded to prepare a positive electrode's slurry. The slurry thus prepared was applied on an aluminum foil as a current collector and dried. Thereafter, the aluminum foil was rolled using a roller and a current collecting tab was put on the foil to prepare a positive electrode.

### [Preparation of Negative electrode]

Artificial graphite as a negative electrode active substance, styrene butadiene rubber (SBR) as a binder and carboxymethyl cellulose as a thickener were added to water so that the weight ratio of the active substance, the binder and the thickener was 97.5:1.5:1. Thereafter, they were kneaded to prepare a negative electrode's slurry. The slurry thus prepared was applied on a copper foil as a current collector and dried. The copper foil was rolled by a roller and a current collecting tab was put on the foil to prepare a negative electrode.

### [Preparation of Battery]

A separator made of polyethylene was put between the positive electrode and the negative electrode prepared in the above manners in such a way that the positive electrode and the negative electrode were opposite, and they were put in a case made from aluminum lamination. In a grow box in an Ar (argon) atmosphere, the above electrolytic solution 1 was dropped in the case in which the electrodes were present and the case was rolled with heat while the case was depressurized to prepare a battery.

### Example 2

### [Preparation of Electrolytic solution]

Li₂B₁₂F₁₂ lithium fluorododecaborate used in Example 1 and LiPF₆ were mixed with a solvent which comprises 40 % by volume of ethylene carbonate and 60 % by volume of dimethyl carbonate (EC + DMC = 100 % by volume) so that Li₂B₁₂F₁₂ and LiPF₆ each had a concentration of 0.4 mol/L and 0.1 mol/L respectively. Furthermore, 2.0 parts by mass of methyl difluoroacetate was added as an additive to the mixture based on 100 parts by mass of the whole solvent (EC + DMC) to prepare an electrolytic solution 2.

### [Measurement of Ion conductivity]

The ion conductivity of the electrolytic solution 2 was measured in the same manner as Example 1. As a result, the conductivity at 45° C was 10.4 mS/cm, the conductivity at 25° C was 8.05 mS/cm, the conductivity at 0° C was 3.82 mS/cm, the conductivity at -10° C was 2.97 mS/cm and the conductivity at -25° C was 1.95 mS/cm.

### [Preparation of Battery]

The procedure of Example 1 was repeated except for using the electrolytic solution 2 in place of the electrolytic solution 1 to prepare a battery.

### Example 3

### [Preparation of Electrolytic solution]

Li₂B₁₂F₁₁Br prepared in Synthetic Example 2 and LiPF₆ were mixed with a solvent which comprises 10 % by volume of ethylene carbonate, 20 % by volume of propylene carbonate, 50% by volume of methylethyl carbonate and 20 % by volume of diethyl carbonate (EC + PC + EMC + DEC = 100 % by volume) so that Li₂B₁₂F₁₁Br and LiPF₆ each had a concentration of 0. 4 mol/L and 0.15 mol/L respectively. Furthermore, 0.1 part by mass of methyl difluoroacetate was added as an additive to the mixture based on 100 parts by mass of the whole solvent (EC + PC + EMC + DEC) to prepare an electrolytic solution 3.

### [Measurement of Ion conductivity]

The ion conductivity of the electrolytic solution 3 was measured in the same manner as Example 1. As a result, the conductivity at 45° C was 8.78 mS/cm, the conductivity at 25° C was 5.18 mS/cm, the conductivity at 0° C was 2.60 mS/cm, the conductivity at -10° C was 1. 79 mS/cm and the conductivity at -25° C was 1.02 mS/cm.

### [Preparation of Battery]

The procedure of Example 1 was repeated except for using the electrolytic solution 3 in place of the electrolytic solution 1 to prepare a battery.

### Example 4

### [Preparation of Electrolytic solution and Preparation of Battery]

Li₂B₁₂F₁₂ (having a purity of 99.9% or more) and LiPF₆ were mixed with a solvent which comprises 10 % by volume of ethylene carbonate, 20 % by volume of propylene carbonate, 40% by volume of methylethyl carbonate and 30 % by volume of diethyl carbonate (EC + PC + EMC + DEC = 100 % by volume) so that Li₂B₁₂F₁₂ and LiPF₆ each had a concentration of 0.4 mol/L and 0.2 mol/L respectively. Furthermore, 1.5 parts by mass of methyl difluoroacetate and 0.8 part by mass of 1,3-propane sultone were added as an additive to the mixture based on 100 parts by mass of the whole solvent (EC + PC + EMC + DEC) to prepare an electrolytic solution 4. The procedure of Example 1 was repeated except for using the electrolytic solution 4 in place of the electrolytic solution 1 to prepare a battery.

### Example 5

### [Preparation of Electrolytic solution]

LiPF₆ purchased from Kishida Chemical Co., Ltd. as an electrolyte for a lithium ion battery was mixed with a solvent which comprises 10 % by volume of ethylene carbonate, 20 % by volume of propylene carbonate, 40% by volume of methylethyl carbonate and 30 % by volume of diethyl carbonate (EC + PC + EMC + DEC = 100 % by volume) so that LiPF₆ had a concentration of 1.1 mol/L. Furthermore, 2.0 parts by mass of methyl difluoroacetate was added as an additive to the mixture based on 100 parts by mass of the whole solvent (EC + PC + EMC + DEC) to prepare an electrolytic solution 5.

### [Measurement of Ion conductivity]

The ion conductivity of the electrolytic solution 5 was measured in the same manner as Example 1. As a result, the conductivity at 45° C was 11.6 mS/cm, the conductivity at 25° C was 7.31 mS/cm, the conductivity at 0° C was 3.78 mS/cm, the conductivity at -10° C was 2.65 mS/cm and the conductivity at -25° C was 1.86 mS/cm.

### [Preparation of Battery]

The procedure of Example 1 was repeated except for using the electrolytic solution 5 in place of the electrolytic solution 1 to prepare a battery.

**Table 1**

| Ex. | Electrolyte | | Solvent | | Additive | | Ion Conductivity | |
|---|---|---|---|---|---|---|---|---|
| | Kind | mol/l | Kind | Vol% | Kind | wt part | Temperature | mS/cm |
| 1 | Li₂B₁₂F₁₂ | 0.4 | EC | 10 | Methyl | 1.5 | 45°C | 8.75 |
| | LiPF₆ | 0.2 | PC | 20 | difluoro | | 25°C | 4.81 |
| | | | EMC | 40 | acetate | | 0°C | 2.46 |
| | | | DEC | 30 | | | -10°C | 1.80 |
| | | | | | | | -25°C | 1.00 |
| 2 | Li₂B₁₂F₁₂ | 0.4 | EC | 40 | Methyl | 2.0 | 45°C | 10.40 |
| | LiPF₆ | 0.1 | DMC | 60 | difluoro | | 25°C | 8.05 |
| | | | | | acetate | | 0°C | 3.82 |
| | | | | | | | -10°C | 2.97 |
| | | | | | | | -25°C | 1.95 |
| 3 | Li₂B₁₂F₁₁Br | 0.4 | EC | 10 | Methyl | 0.1 | 45°C | 8.78 |
| | LiPF₆ | 0.15 | PC | 20 | difluoro | | 25°C | 5.18 |
| | | | EMC | 50 | acetate | | 0°C | 2.60 |
| | | | DEC | 20 | | | -10°C | 1.79 |
| | | | | | | | -25°C | 1.02 |
| 4 | Li₂B₁₂F₁₂ | 0.4 | EC | 10 | Methyl | 1.5 | 45°C | |
| | LiPF₆ | 0.2 | PC | 20 | difluoro | | 25°C | |
| | | | EMC | 40 | acetate | | 0°C | |
| | | | DEC | 30 | 1,3-Propane sultone | 0.8 | -10°C | |
| | | | | | | | -25°C | |
| 5 | LiPF₆ | 1.1 | EC | 10 | Methyl | 2.0 | 45°C | 11.60 |
| | | | PC | 20 | difluoro | | 25°C | 7.31 |
| | | | EMC | 40 | acetate | | 0°C | 3.78 |
| | | | DEC | 30 | | | -10°C | 2.65 |
| | | | | | | | -25°C | 1.86 |

### Examples 6 to 15

In each example, the procedure of Example 1 was repeated except that the kind and concentration of the electrolyte, and the solvent were changed as shown in the table 2, and the amount of methyl difluoroacetate added was changed to 1.5 parts by mass based on 100 parts by mass of the whole solvent to prepare an electrolytic solution.

Furthermore, the procedure of Example 1 was repeated except that the resultant electrolytic solution was used and the positive electrode active substance and the negative electrode active substance were changed as shown in Table 2 to prepare a battery.

**Table 2**

| Ex . | Electrolyte | | Solvent | | Positive electrode active substance | Negative electrode active substance |
|---|---|---|---|---|---|---|
| 6 | 0.2 mol/L | Li₂B₁₂F₁₁H | 30% | DEC | LiMn₂O₄ | Artificial graphite |
| | 0.2 mol/L | LiPF₆ | 20% | PC | | |
| | | | 30% | EC | | |
| | | | 20% | EMC | | |
| 7 | 0.5 mol/L | Li₂B₁₂F₁₂ | 40% | DEC | LiMn₂O₄ | Artificial Graphite |
| | 0.1 mol/L | LiPF₆ | 50% | PC | | |
| | | | 10% | EC | | |
| 8 | 0.4 mol/L | Li₂B₁₂F₁₀H₂ | 30% | DEC | LiCo_{1/3}Ni_{1/3}Mn_{1/3}O₂ | Natural graphite |
| | 0.1 mol/L | LiPF₆ | 20% | PC | | |
| | | | 30% | EC | | |
| | | | 20% | EMC | | |
| 9 | 0.4 mol/L | Li₂B₁₂F₁₂ | 30% | DEC | LiCo_{1/3}Ni_{1/3}Mn_{1/3}O₂ | Natural graphite |
| | 0.05 mol/L | LiPF₆ | 20% | PC | | |
| | 0.05 mol/L | LiBF₄ | 10% | EC | | |
| | | | 40% | EMC | | |
| 10 | 0.4 mol/L | Li₂B₁₂F₁₂ | 30% | DEC | LiFePO₄ | Artificial Graphite |
| | 0.2 mol/L | LiPF₆ | 20% | PC | | |
| | | | 10% | EC | | |
| | | | 40% | EMC | | |
| 11 | 0.4 mol/L | Li₂B₁₂F₁₂ | 30% | DEC | LiFePO₄ | Natural Graphite |
| | 0.15 mol/L | LiPF₆ | 20% | PC | | |
| | 0.05 mol/L | LiBF₄ | 10% | EC | | |
| | | | 40% | EMC | | |
| 12 | 0.4 mol/L | Li₂B₁₂F₁₂ | 60% | EMC | LiCoO₂ | Natural Graphite |
| | 0.1 mol/L | LiPF₆ | 20% | PC | | |
| | | | 10% | EC | | |
| 13 | 0.4 mol/L | Li₂B₁₂F₁₂ | 30% | DEC | LiMn₂O₄ | SiO |
| | 0.15 mol/L | LiBF₄ | 20% | PC | | |
| | | | 10% | EC | | |
| | | | 40% | EMC | | |
| 14 | 0.4 mol/L | Li₂B₁₂F₁₂ | 30% | DEC | LiCO_{1/3}Ni_{1/3}Mn_{1/3}O₂ | Artificial Graphite |
| | 0.05 mol/L | ZiPF₆ | 20% | PC | | |
| | | | 10% | γ-BL | | |
| | | | 40% | EMC | | |
| 15 | 0.4 mol/L | Li₂B₁₂F₁₂ | 30% | DEC | LiCo_{1/3}Ni_{1/3}Mn_{1/3}O₂ | Artificial graphite |
| | 0.2 mol/L | LiPF₆ | 20% | EC | | |
| | | | 10% | F-ether | | |
| | | | 40% | EMC | | |

In Table 2, "PC" is propylene carbonate, "EC" is ethylene carbonate, "EMC" is ethylmethyl carbonate, "DEC" is diethyl carbonate, "DMC" is dimethyl carbonate, " y -BL" is γ -butylolactone and "F-ether" is 1,2,2,2-tetrafluoroethylethylether. The solvent was purchased from Kishida Chemical Co., Ltd.

### Example 16

### [Battery evaluation 1 (room temperature (25 ° C) cycle properties)]

The battery prepared in Example 1 was subjected to charging and discharging twice at 25° C at a current value of 0.1 C (current value capable of fully charging or fully discharging for 0.1 hr)(hereinafter sometimes referred to "aged").

Subsequently, the battery was charged at a current value of 1.0 C until the battery voltage was 4.2 V, and further kept at a battery voltage of 4.2 V, and then charged to a current value corresponding to 0.1 C (charging A). Thereafter, the battery was kept at an open circuit for 10 min and then discharged at a current value of 1.0 C until the battery voltage decreased to 2.7 V (discharging B). When the voltage reached to 2.7 V, the battery was kept at an open circuit for 10 min and then the discharged volume was measured by a charge-discharge tester (TOSCAT-3000 manufactured by Toyo System Co., Ltd.) (first discharged volume) . Thereafter, charging A and discharging B were repeated in the same manner as described above and the discharged volume was measured to determine the cycle properties of the battery. As a result, the cycle life of this battery was 2300 times wherein the cycle life is determined by the repetition number of a cycle of charging and discharging until the discharged volume of the battery decreases to 80 % of the first discharged volume.

In the present invention, the discharged volume was measured using the same device.

### [Battery evaluation 2]

The battery prepared in Example 1 was aged and then charged (charging A) in the same manner as the battery evaluation 1. Thereafter, the battery was allowed to stand for 10 min, to conduct discharging at a current value of 0.1 C until the battery voltage reached to 2.7 V. At the time, the discharged volume was taken as 100 %. Next, after the battery voltage reached to 2.7 V, the battery was allowed to stand for 10 min and then charged (charging A) in the same manner as described above, and further allowed to stand for 10 min. Furthermore, the battery was discharged at a current value of 0.2 C until the battery voltage reached to 2.7 V and then the discharged volume was determined. Moreover, the battery was charged (charging A) and allowed to stand for 10 min, and then discharged at a current value of 0.5 C and the discharged volume was determined. Successively, the battery was charged with a constant current at a current value of 1.0 C until the current decreased to the definite value at a constant voltage (CCCV charging) and allowed to stand for 10 min, and thereafter discharged at a current value of 1.0 C. The battery was subjected to CCCV charging at a current value of 2 C in the same manner and then subjected to CCCV charging at a current value of 5 C. After these CCCV charging operations, the battery was allowed to stand for 10 min and then discharged at a current value of 2 C and discharged at a current value of 5 C. As a result, when the discharged volume at a current value of 0.1 C was taken as 100 %, it was determined as follows. The discharging at a current value of 0.2 C was 99 %, the discharging at a current value of 0.5 C was 98 %, the discharging at a current of 1 C was 96 %, the discharging at a current value of 2 C was 93 %, and the discharging at a current value of 5 C was 89 %.

### [Battery evaluation 3]

The battery prepared in Example 1 was aged and subjected to CCCV charging at a current value of 1 C, and thereafter allowed to stand for 10 min and discharged at a current value of 1 C until the battery voltage reached to 2.7 V. Successively, the battery was allowed to stand for 10 min and subjected to CCCV charging at a current value of 1 C. The battery was cooled to -10° C and then discharged at a current value of 1 C until the battery voltage reached to 2.7 V. As a result, the discharged volume at -10° C (low temperature discharging properties) was 69 % of the discharged volume at 25° C. Furthermore, after the battery temperature was returned to 25° C, the battery was subjected to CCCV charging at a current value of 1 C and then heated until the battery temperature reached to 60° C, and discharged at a current value of 1 C until the battery voltage reached to 2.7 V. As a result, the discharged volume at 60° C was 102 % of the discharged volume at 25° C.

### [Battery evaluation 4]

The battery prepared in Example 1 was aged and subjected to CCCV charging at a current value of 1 C and then allowed to stand for 10 min and discharged at a current value of 1 C until the battery voltage reached to 2.7 V. Successively, the battery was cooled to -10° C and subjected to CCCV charging at a current value of 1 C. Thereafter, the battery temperature was returned to 25° C and then the battery was discharged at a current value of 1 C until the battery voltage reached to 2.7 V. As a result, the discharged volume of the battery charged at -10° C was 72 % of the discharged volume of the battery charged at 25° C.

### [Battery evaluation 5]

The battery prepared in Example 1 was aged and subjected to CCCV charging at a current value of 1 C and then allowed to stand for 10 min and discharged at a current value of 1 C until the battery voltage reached to 2. 7 V. Successively, the battery was heated to 60° C and subjected to CCCV charging at a current value of 1 C. Thereafter, the battery temperature was returned to 25° C and then the battery was discharged at a current value of 1 C until the battery voltage reached to 2.7 V. As a result, the discharged volume of the battery charged at 60° C was 101 % of the discharged volume of the battery charged at 25° C.

### [Battery evaluation 6 (cycle properties at a high temperature of 60° C)]

The battery prepared in Example 1 was aged, heated to 60° C and subjected to CCCV charging at a current value of 1 C and then allowed to stand at 60° C for 10 min and discharged at 60° C at a discharging rate of 1 C until the battery voltage reached to 2.7 V. The discharged volume was measured (first discharged volume). Successively, the battery was allowed to stand for 10 min and then subjected to repetition of a cycle of charging and discharging at 60° C in the same manner. The discharged volume was measured. As a result, when the discharged volume of the battery decreased to 80 % of the first discharged volume, the repetition cycle number was 1230 times.

### [Battery evaluation 7]

The battery prepared in Example 1 was aged and subjected to CCCV charging at a current value of 1 C and then allowed to stand for 10 min and discharged at a current value of 1 C until the battery voltage reached to 2.7 V. The discharged volume was measured (first discharged volume). The cycle of charging and discharging of the battery was repeated five times and then charged with a constant current at a current value of 1 C. Even when the charged volume was over the first discharged volume, the battery voltage hardly changed. The charging of the battery was continued at a current value of 1 C until 400 % of the full charging (State of Charge, SOC) to perform a over charging test. In the test, the change of the battery voltage was shown in Fig.1 (A). Thereafter, the battery was discharged at an atmosphere of 25° C at a current value of 1 C. The discharged volume was 89% of the first discharged volume. Next, the CCCV charging at a current value of 1 C and the discharging at a current value of 1 C until 2.7 V were repeated 200 times. The discharged volume after the repetition 200 times was 86 % of the first discharged volume.

### Comparative Example 1

Li₂B₁₂F₁₂ lithium fluorododecaborate used in Example 1 and LiPF₆ were mixed with a solvent which comprises 20 % by volume of methyl difluoroacetate and 10 % by volume of ethylene carbonate, 20 % by volume of propylene carbonate and 50 % by volume of methylethyl carbonate (methyl difluoroacetate + EC + PC + EMC = 100 % by volume) so that Li₂B₁₂F₁₂ and LiPF₆ each had a concentration of 0.4 mol/L and 0. 2 mol/L respectively, to prepare an electrolytic solution C1. An additive was not added. In this example, methyl difluoroacetate was a solvent and was not an additive in viewpoint of the mixed amount.

### [Measurement of Ion conductivity]

The ion conductivity of the electrolytic solution C1 was measured in the same manner as Example 1. As a result, the conductivity at 45° C was 10.05 mS/cm, the conductivity at 25° C was 6.20 mS/cm, the conductivity at 0° C was 3.07 mS/cm, the conductivity at -10° C was 2.20 mS/cm and the conductivity at -25° C was 1.54 mS/cm.

### [Preparation of Battery]

The procedure of Example 1 was repeated except for using the electrolytic solution C1 in place of the electrolytic solution 1 to prepare a battery.

### [Comparative battery evaluation 1]

The cycle properties of the battery prepared in Comparative Example 1 were measured in the same manner as the battery evaluation 1 of Example 16. As a result, the cycle life of this battery was 143 times wherein the cycle life is determined by the repetition number of a cycle of charging and discharging until the discharged volume of the battery decreases to 80 % of the first discharged volume.

### [Comparative battery evaluation 2]

The discharged volume of the battery prepared in Comparative Example 1 was measured in the same manner as the battery evaluation 2 of Example 16. As a result, when the discharged volume at a current value of 0.1 C was 100 %, it was determined as follows. The discharging at a current value of 0.2 C was 96 %, the discharging at a current value of 0.5 C was 94 %, the discharging at a current value of 1 C was 91 %, the discharging at a current value of 2 C was 88 %, and the discharging at a current value of 5 C was 72 %.

### [Comparative battery evaluation 3]

The discharged volume of the battery prepared in Comparative Example 1 was measured in the same manner as the battery evaluation 3 of Example 16. As a result, the discharged volume at -10° C was 49 % of the discharged volume at 25° C. Furthermore, after the battery temperature was returned to 25° C, the battery was subjected to CCCV charging at a current value of 1 C and then heated until the battery temperature reached to 60° C, and discharged at a current value of 1 C until the battery voltage reached to 2.7 V. As a result, the discharged volume at 60° C was 68 % of the discharged volume at 25° C.

### [Comparative battery evaluation 4]

The discharged volume of the battery prepared in Comparative Example 1 was measured in the same manner as the battery evaluation 4 of Example 16. As a result, the discharged volume of the battery charged at -10° C was 54 % of the discharged volume of the battery charged at 25° C.

### [Comparative battery evaluation 5]

The discharged volume of the battery prepared in Comparative Example 1 was measured in the same manner as the battery evaluation 5 of Example 16. As a result, the discharged volume of the battery charged at 60° C was 51 % of the discharged volume of the battery charged at 25° C.

### [Comparative battery evaluation 6]

The discharged volume of the battery prepared in Comparative Example 1 was measured in the same manner as the battery evaluation 6 of Example 16. As a result, when the discharged volume of the battery decreased to 80 % of the first discharged volume, the repetition cycle number was 85 times.

### [Comparative battery evaluation 7]

The battery prepared in Comparative Example 1 was aged and subjected to CCCV charging at a current value of 1 C and then allowed to stand for 10 min and discharged at a current value of 1 C until the battery voltage reached to 2.7 V (first discharged volume). The cycle of charging and discharging of the battery was repeated five times and then charged with a constant current at a current value of 1 C. When the charged volume was over the first discharged volume, the battery voltage increased gradually. When the charging of the battery was continued at a current value of 1 C until 180 % of the full charging, the battery voltage increased rapidly. Thereafter, the battery was discharged at a current value of 1 C under a condition of 25° C, but it was hardly discharged.

### Comparative Example 2

The procedure of Example 1 was repeated except for not adding methyl difluoroacetate which was used as an additive in the electrolytic solution preparation in Example 1, to prepare an electrolytic solution, and a battery was prepared using this electrolytic solution in the same manner as in Example 1.

### Comparative Example 3

The procedure of Example 5 was repeated except for not adding methyl difluoroacetate which was used as an additive in the electrolytic solution preparation in Example 5, to prepare an electrolytic solution, and a battery was prepared using this electrolytic solution in the same manner as in Example 5.

### Example 17

Various battery properties were evaluated using the batteries prepared in Examples 2 to 15 and Comparative Examples 2 and 3.

The evaluation items of the battery properties were as follows.

The room temperature (25° C) cycle properties were evaluated based on the battery evaluation 1 in Example 16, the low temperature (-10° C) discharging properties were evaluated based on the battery evaluation 3 in Example 16, the high temperature (60° C) cycle properties were evaluated based on the battery evaluation 6 in Example 16 and the over charging properties were evaluated based on the battery evaluation 7 in Example 16. When the positive electrode active substance is an olivine type LiFePO₄, the experiment was carried out in the same manner as Example 16 except that the upper limit of a charging voltage was 4.0 V and the end discharging voltage was 2.5 V. The results are shown in Table 3. In the table, the room temperature cycle properties show the repetition cycle number until the discharged volume decreases 80 % of the initial volume (first discharged volume), the low temperature discharging properties indicate the discharged volume at -10° C to the discharged volume at room temperature, the high temperature cycle properties indicate the repetition cycle number until the discharged volume decreases 80 % of the initial volume (first discharged volume), over charging properties indicate the quantity of electricity at the time of discharging at a current value of 1 C at room temperature until the definite voltage after over charging at a current value of 1 C until 250 % of the full discharged volume. However, before 250 % charging, when the battery voltage was over 10 V or the battery caught fire or broken by over charging, the residual volume ratio is indicated by 0 %.

The change of the voltage at the time of over charging of the battery prepared in Comparative Example 3 is shown in Fig. 1 (B).

**Table 3**

| Ex. | Room-temperature cycle properties (cycle until 80%) | Low-temperature discharging properties (room-temperature capacity ratio %) | High-temperature cycle properties (cycle until 80%) | Overcharging properties (remaining capacity ratio %) |
|---|---|---|---|---|
| Com. EX. | | | | |
| Ex. 2 | 1980 | 61 | 980 | 82 |
| Ex. 3 | 785 | 67 | 115 | 83 |
| Ex. 4 | 3856 | 82 | 1820 | 93 |
| Ex. 5 | 1760 | 85 | 612 | 0 |
| Ex. 6 | 1830 | 86 | 650 | 83 |
| Ex. 7 | 832 | 83 | 355 | 87 |
| Ex. 8 | 1656 | 68 | 1050 | 85 |
| Ex. 9 | 1950 | 81 | 1150 | 75 |
| Ex. 10 | 3925 | 67 | 1110 | 88 |
| Ex. 11 | 3123 | 78 | 1514 | 83 |
| Ex. 12 | 2545 | 63 | 1526 | 78 |
| Ex. 13 | 1725 | 77 | 829 | 89 |
| Ex. 14 | 1865 | 81 | 945 | 46 |
| Ex. 15 | 846 | 52 | 272 | 63 |
| Com. Ex. 2 | 265 | 83 | 95 | 71 |
| Com. Ex. 3 | 231 | 82 | 34 | 0 |

## Claims

1. A nonaqueous electrolytic solution for a secondary battery comprising an electrolyte, a solvent and an additive, wherein methyl difluoroacetate is contained as the additive in an amount of not less than 0.05 part by mass and not more than 10 parts by mass based on 100 parts by mass of the whole solvent.

2. The nonaqueous electrolytic solution for a secondary battery according to claim 1, wherein the electrolyte comprises lithium fluorododecaborate (A) represented by the following formula (1) and at least one electrolyte salt (B) selected from the group consisting of LiPF₆ and LiBF₄;
Li₂B₁₂FₓZ₁₂₋ₓ (1)
in the formula, X is not less than 8 and not more than 12, and Z is a hydrogen atom, a chlorine atom or a bromine atom.

3. The nonaqueous electrolytic solution for a secondary battery according to claim 2, wherein the concentration of the lithium fluorododecaborate (A) in the electrolytic solution is not less than 0.2 mol/L and the concentration of the electrolyte salt (B) in the electrolytic solution is not less than 0.05 mol/L.

4. The nonaqueous electrolytic solution for a secondary battery according to claim 2 or 3, wherein the lithium fluorododecaborate (A) and the electrolyte salt (B) are contained in a molar ratio ((A): (B)) of 95:5 to 30:70 with the proviso that (A) + (B) = 100.

5. The nonaqueous electrolytic solution for a secondary battery according to any one of claims 2 to 4, wherein the molar concentration of the total of the lithium fluorododecaborate (A) and the electrolyte salt (B) ((A) + (B)) is from 0.25 to 1.5 mol/L.

6. The nonaqueous electrolytic solution for a secondary battery according to any one of claims 2 to 5, wherein X in the formula (1) is 12.

7. The nonaqueous electrolytic solution for a secondary battery according to any one of claims 1 to 6, wherein 1,3-propane sultone is further contained as the additive in an amount of not less than 0.05 part by mass and not more than 10 parts by mass based on 100 parts by mass of the whole solvent.

8. The nonaqueous electrolytic solution for a secondary battery according to any one of claims 1 to 7, wherein the solvent comprises at least one carbonate selected from the group consisting of a cyclic carbonate and a chain carbonate.

9. A nonaqueous electrolytic solution secondary battery comprising a positive electrode, a negative electrode and a nonaqueous electrolytic solution as claimed in any one of claims 1 to 8.
